# EUROPEAN PATENT APPLICATION

(11) **EP 2 871 561 A1**
(43) Date of publication of application: **13.05.2015**
(21) Application number: 13829535.7
(22) Date of filing: 13.08.2013
(51) Int. Cl.: G06F 3/048

(54) **DESKTOP SYSTEM OF MOBILE TERMINAL AND INTERFACE INTERACTION METHOD AND DEVICE**

(30) Priority: 14.08.2012 CN 201210289655
(71) Applicant: Xiaomi Inc., Beijing 100085 (CN)
(72) Inventor: XU, Fei, Beijing 100085 (CN); JIN, Fan, Beijing 100085 (CN); REN, Tian, Beijing 100085 (CN); SUN, Guangdou, Beijing 100085 (CN); LI, Weixing, Beijing 100085 (CN); SUN, Daqing, Beijing 100085 (CN); WANG, Ying, Beijing 100085 (CN); ZHU, Cai, Beijing 100085 (CN); HU, Xiaowei, Beijing 100085 (CN); YUAN, Bo, Beijing 100085 (CN)
(74) Representative: Robson, Aidan John
(86) International application number: PCT/CN2013/081407
(87) International publication number: WO 2014/026599

(57) **Abstract**

The present invention relates to the technical field of communications, and disclosed are a desktop system of a mobile terminal and an interface interaction method and device. The desktop system provided by the present invention comprises a content layer and a background layer. A designer only needs to set a preset point of an icon corresponding to a component in the content layer to be in preset location of the content layer, and does not need limit the shape of the component, so as to grant the designer with greater design permissions. The preset location of the component on the content layer keeps corresponding to a preset location of a scenario shown by the background layer, so that the designer performs arrangement according to the icon of the component and the scenario shown by the background layer to achieve a visual effect of a real scenario, so as to increase the aesthetics and diversity of the style of the desktop interface, thereby improving use experience of a user.

## Description

### TECHNICAL FIELD

The present disclosure generally relates to the technical field of telecommunication, and particularly, to a desktop system and an interface interaction method and apparatus for a mobile terminal.

### BACKGROUND

In the age of mobile Internet, mobile terminals are widely used. In order to provide more convenient services to users, interactive interfaces in the mobile terminals are getting increasingly personalized.

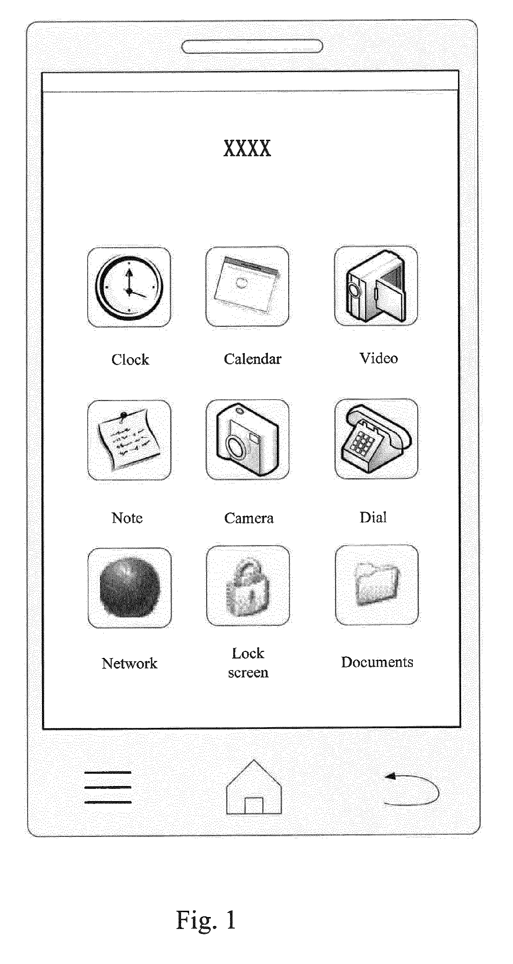

Specifically, a desktop is a main region of a screen displayed after a mobile terminal is turned on, and serves to provide an interactive interface for a user. The desktop typically includes a wallpaper which is set from the user (as a background of the desktop), and is arranged with components for interaction with the user, for example, shortcuts. The shortcuts may include shortcuts set by system and corresponding to APPs (Applications), and shortcuts self-defined by the user. Currently, as shown in Fig.1, the shortcuts are arranged on the desktop in a check pattern of nine, twelve or sixteen squares.

Existing desktops provide many squares for arrangement of the shortcuts, and the positions and sizes of the squares are fixed. Since shortcuts may only be placed in squares, designers, in designing the interface, are required to design the icons of the shortcuts with fixed sizes and place the icons in positions being aligned with the squares. Also, arrangements of the shortcuts by users are limited within the above squares. Thus, interface designers of the mobile terminals have rather limited power in designing the desktop interfaces, and the desktop interface styles are dull, monotonous and offer poor user experience.

### SUMMARY

A desktop system and an interface interaction method and apparatus for a mobile terminal are provided by embodiments of the present disclosure, which may diversify the styles of the interface of the mobile terminal, so as to increase the design power of the designers, and improve user experience.

A desktop system for a mobile terminal is provided by the present disclosure, and the desktop system is constituted of one or more content layers and one or more background layers;
wherein,
each background layer is located below a content layer corresponding to the background layer, and is configured to present a scene as a desktop background, and
each content layer is located above a background layer corresponding to the content layer, and is arranged therein with components for interaction with an user, preset vertexes of icons corresponding to the components are set in preset positions in the content layer, and the preset positions in the content layer correspond to preset positions in a scene presented by the background layer, such that the icons match with the scene presented by the background layer.

An interface interaction method for a mobile terminal is provided by the present disclosure, the method includes:
displaying one or more content layers and one or more background layer;
detecting a touch event occurring on a screen of the mobile terminal, and determining and acquiring an operation instruction corresponding to the touch event; and
according to the operation instruction, performing an operation corresponding to the operation instruction,
wherein each background layer is located below a content layer corresponding to the background layer, and is configured to present a scene as a desktop background; and
each content layer is located above a background layer corresponding to the content layer, and is arranged therein with components for interaction with an user, preset vertexes of icons corresponding to the components are set in preset positions in the content layer, and the preset positions in the content layer correspond to preset positions in a scene presented by the background layer, such that the icons match with the scene presented by the background layer.

An interface interaction apparatus for a mobile terminal is provided by the present disclosure, the apparatus includes:
a display module, configured to display one or more content layers and one or more background layers;
an instruction acquiring module, configured to detect a touch event occurring on a screen of the mobile terminal, and determine and acquire an operation instruction corresponding to the touch event; and
a performing module, configured to, according to the operation instruction, perform an operation corresponding to the operation instruction,
wherein each background layer is located below a content layer corresponding to the background layer, and is configured to present a scene as a desktop background, and
each content layer is located above a background layer corresponding to the content layer, and is arranged therein with components for interaction with an user, preset vertexes of icons corresponding to the components are set in preset positions in the content layer, and the preset positions in the content layer correspond to preset positions in a scene presented by the background layer, such that the icons match with the scene presented by the background layer.

The advantageous effects of the embodiments of the present disclosure include the following.

In the desktop system and an interface interaction method and apparatus for a mobile terminal provided by the embodiments of the present disclosure, the desktop system provided by the present disclosure is constituted of one or more content layers and one or more background layers, so the designer only needs to set positions of preset vertexes of icons corresponding to the components in a content layer to preset positions in the content layer, without limiting shapes of the components. Thereby, the designer may be given more design powers, and the preset positions of the components in the content layer keep corresponding to the preset positions in scene presented by the background layer, so the designer may match the icons of the components with the scene presented by the background layer to obtain a vivid visual effect, and the styles of the desktop interface may be beautified and diversified, so as to improve user experience.

### BRIEF DESCRIPTION OF THE DRAWINGS

In order to illustrate the technical solutions of the embodiments of the present disclosure more clearly, a brief introduction to the accompany drawings which may be used in the description of the related art or the embodiments may be given hereinafter. Apparently, the drawings in the description below are merely for illustrating some embodiments of the present disclosure, and other drawings may be obtained by those skilled in the art according to these drawing.
Fig.1 is a schematic view showing an interface of an existing desktop provided in the BACKGROUND sector of the present disclosure;
Fig.2 is a schematic view showing a configuration of a desktop system provided by embodiments of the present disclosure;
Fig.3 is a schematic view showing a configuration of a background layer provided by embodiments of the present disclosure;
Fig.4 is a schematic view showing a displayed interface of a desktop system provided by embodiments of the present disclosure;
Fig.5 is a schematic view showing a configuration of a close view background layer in a desktop system provided by embodiments of the present disclosure;
Fig.6 is a schematic view showing a distant view background layer in a desktop system provided by embodiments of the present disclosure;
Fig.7 is a schematic view showing a configuration of a content layer provided by embodiments of the present disclosure;
Fig.8 is a schematic view showing position settings of icons in a desktop system provided by embodiments of the present disclosure;
Fig.9 is a schematic view showing sliding of a desktop interface upon receiving a slide instruction issued from a user, provided by embodiments of the present disclosure;
Fig.10 is a flow chart showing an interface interaction method for a mobile terminal provided by embodiments of the present disclosure;
Fig.11 is a flow chart showing a process of editing a content layer and a background layer provided by embodiments of the present disclosure;
Fig.12 is a schematic view showing a second background layer provided by embodiments of the present disclosure;
Fig.13 is a schematic view showing a second desktop scene provided by embodiments of the present disclosure;
Fig.14 is a schematic view showing an operation of a predetermined operation event provided by embodiments of the present disclosure;
Fig.15 is a block diagram showing an interface interaction apparatus for a mobile terminal provided by embodiments of the present disclosure;
Fig.16 is a block diagram showing a second interface interaction apparatus for a mobile terminal provided by embodiments of the present disclosure;
Fig.17 is a block diagram showing a third interface interaction apparatus for a mobile terminal provided by embodiments of the present disclosure;
Fig.18 is a block diagram showing a display module in an interface interaction apparatus for a mobile terminal provided by embodiments of the present disclosure; and
Fig.19 is a block diagram showing a fourth interface interaction apparatus for a mobile terminal provided by embodiments of the present disclosure.

### DETAILED DESCRIPTION

Hereinafter, specific embodiments of a desktop system and an interface interaction method and apparatus for a mobile terminal provided by embodiments of the present disclosure will be described in detail with reference to the accompany drawings.

It should be noted that, in this embodiment, the mobile terminal is for example a mobile phone, however, in the present disclosure, the mobile terminal is not limited to a mobile phone, and it may include a tablet computer, a MP4 and other devices that have a display screen.

Firstly, a desktop system is provided by embodiments of the present disclosure. The desktop system consists of one or more background layers and one or more content layers.

Wherein,
each background layer is located below a content layer corresponding to the background layer, and is configured to present a scene as a desktop background; and
each content layer is located above a background layer corresponding to the content layer, and is arranged therein with components for interaction with an user. Preset vertexes of icons corresponding to the above components are set in preset positions in the content layer, and the preset positions in the content layer correspond to preset positions of a scene presented by the background layer, such that the icons match with the scene presented by the background layer.

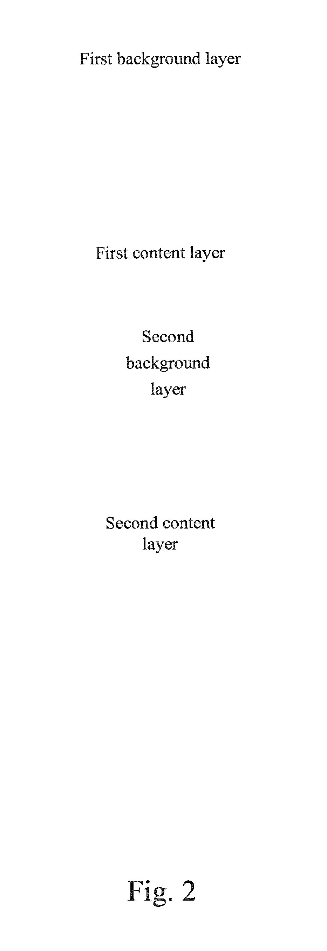

It should be noted that, the desktop system provided by the present disclosure may be any combination of background layers and content layers. Moreover, the background layers may include one or more slidable background layers and one or more stationary background layers. A desktop system shown in Fig.2 is a combination of two background layers and two content layers, wherein a first background layer corresponds to a first content layer, and a second background layer corresponds to a second content layer; and as for positions, the first background layer is located below the first content layer, and the second background layer is located above the second content layer.

Specifically, each of the above background layers serves to present a scene as a desktop background by using a static picture or a dynamic picture, that is, designers of the desktop interface may set the static picture or the dynamic picture as the background layer to be the desktop background.

Moreover, the components arranged in each of the above content layers include a shortcut, a widget, a switch and the like. For example, they may be a shortcut for an APP, a clock, a widget such as monitor device for usage of CPU (Central Processing Unit), WiFi (Wireless-Fidelity) network, a profile switch, and the like.

Further, the above background layers may include one or more slidable background layers.

In case where the background layer includes only one slidable background layer, after the mobile terminal detects a slide instruction, the above slidable background layer and the content layer slide by preset distances in a direction instructed by the slide instruction, and preset positions in the content layer keep corresponding to the preset positions of the scene presented by the slidable background layer.

In case where the background layer includes a plurality of slidable background layers, after the mobile terminal detects a slide instruction, each of the slidable background layers slides in a direction instructed by the slide instruction by a preset distance corresponding to the layer of the slidable background layer.

The above stationary background layer does not perform a sliding operation when the mobile phone detects a slide instruction.

Still further, in order to diversify the interface of the desktop system provided by the present disclosure, and make the scene presented by the background layers to present a solid effect, the above desktop system consists of at least two slidable background layers. The slidable background layers respectively serves to present a close view, a distant view, etc. as required by the desktop scene, and a width of each of the slidable background layers corresponds to the layer of the slidable background layer.

Specifically, the width of each of the slidable background layers may be increased or decreased at a preset ratio according to a from-close-to-far or a from-far-to-close visual effect.

Preferably, after the mobile terminal detects a slide instruction, the content layer slides in a direction instructed by the slide instruction by a distance equal to a width of a screen of the mobile terminal.

Further, in case where the background layer includes a plurality of slidable background layers, among the plurality of slidable background layers, the slidable background layer which keeps corresponding relationship in positions with the icons arranged in a content layer slides by a same distance with the content layer.

Still further, in case where the background layer includes a plurality of slidable background layers, another optional solution is when the mobile terminal detects a slide instruction, a sliding distance of each of the slidable background layers is preset by the designer, such that, when the content layer and the plurality of slidable background layers are sliding, these layers creates a solid sliding effect, so as to make the desktop scene look more vivid.

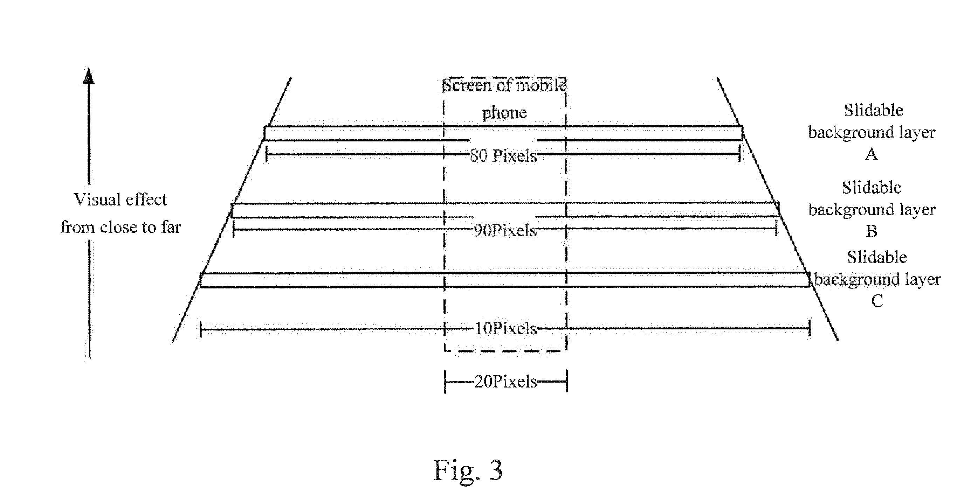

For example, as shown in Fig.3, the desktop system consists of three slidable background layers, respectively a slidable background layer A, a slidable background layer B and a slidable background layer C.

Wherein, in designing the slidable background layers, each slidable background layer supports for example five frames of screens. That is, each slidable background layer may support the mobile phone to perform four times of screen rolling operation.

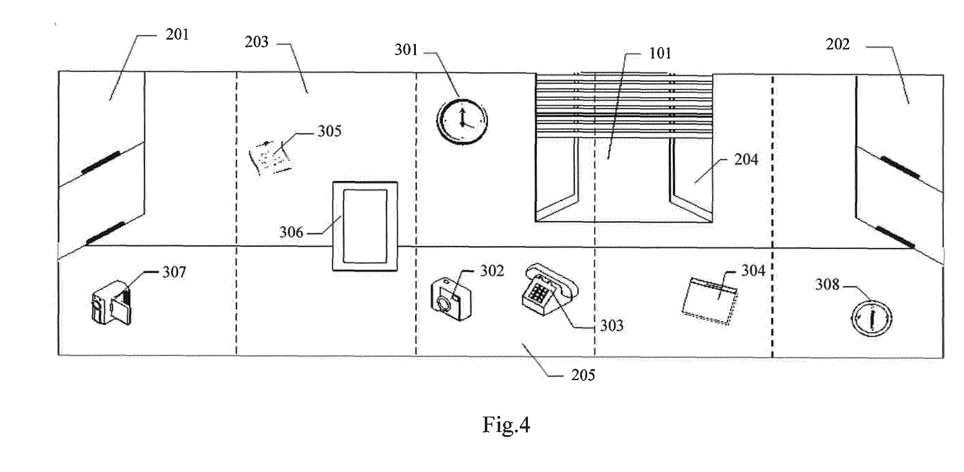

As shown in Fig.4, in the three slidable background layers, the slidable background layer A is below the slidable background layer B, and the slidable background layer B is below the slidable background layer C. Each of the slidable background layers has a different width, respectively 90, 100 and 110 pixels, which produces a visual effect to the user that distances of the slidable background layers A, B and C are getting more and more distant from the user

Accordingly, if, for example, each of the background layers A, B and C is a slidable background layer, when the user issues a slide instruction through the touch screen, the mobile terminal performs a screen rolling operation in a direction of the above slide instruction. Wherein, if a width of a screen of a mobile phone is for example 20 pixels, each time the screen performs a rolling operation, the sliding distances of the slidable background layers A, B and C may respectively be 15, 17.5 and 20 pixels.

Specifically, the slidable background layer C is the visually closest layer to the user, accordingly, the width of the slidable background layer C is the largest, with 100 pixels. Each time the screen performs a rolling operation, the slidable background layer C slides by a distance of 100/5=2 pixels.

The slidable background layer B is a closer layer visually to the user, accordingly, the width of the slidable background layer B is medium, with 90 pixels. Each time the screen performs a rolling operation, the slidable background layer B slides by a distance of (90-20)/(5-1) =17.5pixels.

The slidable background layer A is a visually farthest layer to the user, accordingly, the width of the slidable background layer A is the smallest, with 80 pixels. Each time the screen performs a rolling operation, the slidable background layer A slides by a distance of (80-20)/(5-1) =15pixels.

Through the above improvement, when the slidable background layer A and the slidable background layer B slide on the screen, changes between the frames of screens before and after the rolling may be different, so as to present a from-close-to-far solid visual effect.

While in the existing desktop system shown in Fig.1, the icons of the components may only be of fixed square shapes and fixed positions, and they cannot be connected visually to the desktop background. Therefore, compared with the related art, the interface of the desktop system provided by the present disclosure is more personalized.

Hereinafter, a specific desktop system is illustrated as an example.

Illustration is still given by an example of designing in case where the background layers and the content layer support five frames of screens, as shown in Fig.4, which is a schematic view showing a displayed interface of a specific desktop system. The desktop system consists of two slidable background layers and one content layer.

Wherein the slidable background layers include a distant view background layer and a close view background layer, the close view background layer is located above the distant view background, and the content layer is located above the close view background layer.

As shown in Fig.4, each of the background layers and the content layer is designed with a width of five frames of screens, which are respectively a first frame, a second frame, a third frame, a fourth frame and a fifth frame from left to right, as divided by the dash lines in Fig.4.

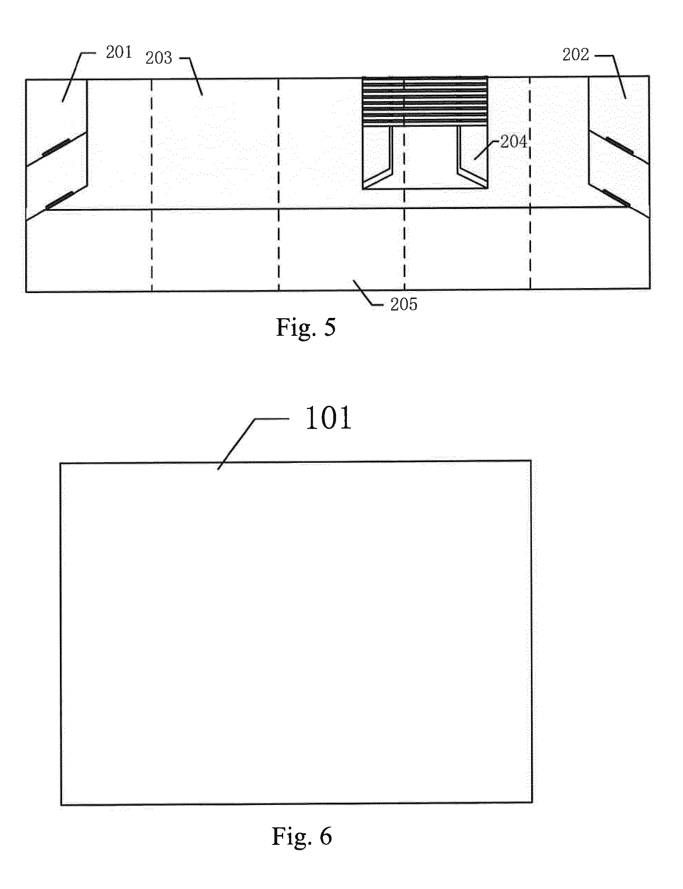

Specifically,
as shown in Fig.5, the close view background layer consists of a static picture that includes a left wall cabinet 201, a right wall cabinet 202, a wall 203, a window 204 and a table 205.

Wherein a visible visual field (a region shown in vertical lines) of the window 204 is set as transparent, so as to display a scene presented by the distant view background layer.

The distant view background layer may consist of a static picture or a dynamic picture, as shown as the distant view background layer 101 in vertical lines in Fig.6. In a specific embodiment, the designer may select a picture of a scene whatever he desires, such as a meadow, a sea and the like.

In the desktop system of the present embodiment shown in Fig.4, the window 204 may be displayed only in the third frame and the fourth frame, and a scene presented by Fig.6 is what the user may see through the window (i.e. a farther scene than the close view background layer), accordingly, it is enough that a width of the picture taken as the distant view background layer is less than the width of two frames of screens, and is larger than a width of the visible visual field of the window 204.

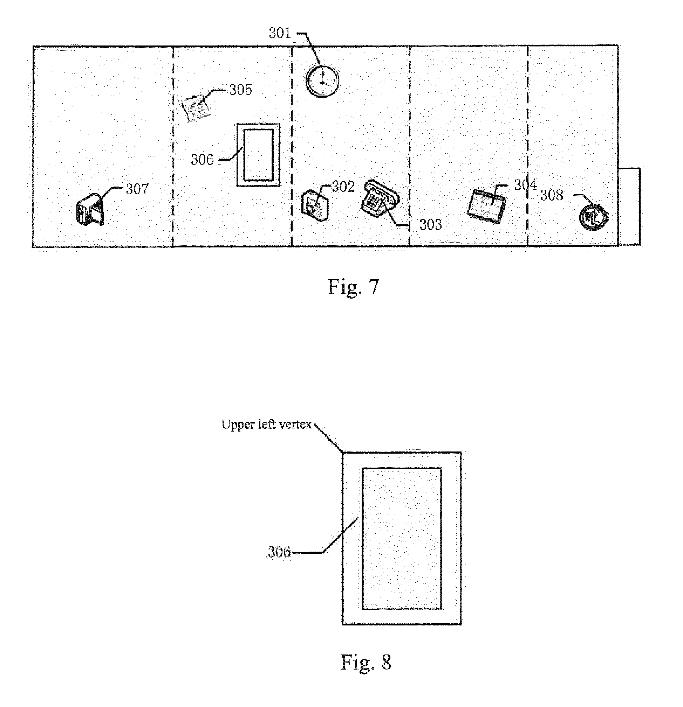

As shown in Fig.7, the content layer consists of a plurality of components for interaction with the user, including a clock widget 301, a camera shortcut 302, a dial shortcut 303, a calendar shortcut 304, a note widget 305, an album shortcut 306, a video camera shortcut 307 and a compass shortcut 308.

Wherein the icons corresponding to the above components may be arbitrarily set by the designer, and are not limited by shapes and positions any more. It only needs to set the preset vertexes of the icons in the preset positions in the content layer. Moreover, in the content layer, except for the regions covered by the icons corresponding to the components, other regions are all transparent.

For example, as shown in Fig.8, in setting the album shortcut 306, it only needs to set a coordinate of an upper left vertex of the album shortcut 306 such that the coordinate of the upper left vertex of the album shortcut 306 coincides with a coordinate of the present position of the content layer.

After the designer completes the design of the background layers and the content layer, the background layers and the content layer are overlapped such that the desktop interface has a diversified solid effect. As shown in the scene of Fig.4, in a visual effect, the clock widget 301 is hanged on the wall 203, and the dial shortcut 303 represented by a telephone image is placed on the table 205, which offers a vivid visual effect.

Further, in designing the background layers and the icons corresponding to the components, properties such as color and brightness may be edited through a picture edit tool to achieve a more personalized effect.

Hereinafter, the rolling operation of the screen is illustrated as an example.

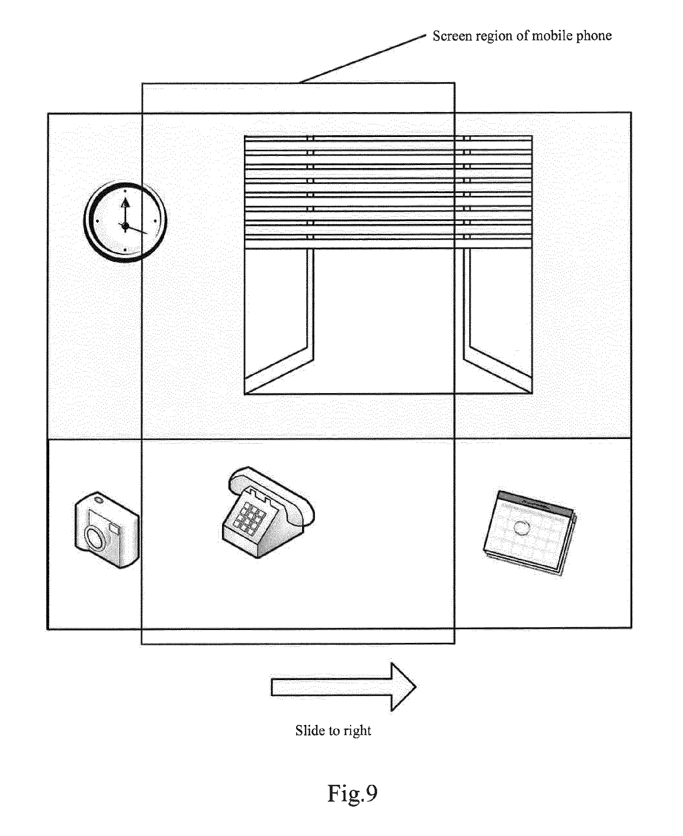

For example, the mobile phone currently presents the fourth frame, as shown in Fig.9. When the user issues a slide instruction of sliding the screen to right by touching the touch screen, the distant view background layer, the close view background layer and the content layer all slide to right. Moreover, since the sliding distances of the close view background layer and the content layer are the same, and the sliding distance to right of the distant view background layer is less than the sliding distances of the close view background layer and the content layer, a from-far-to-close visual effect may be achieved.

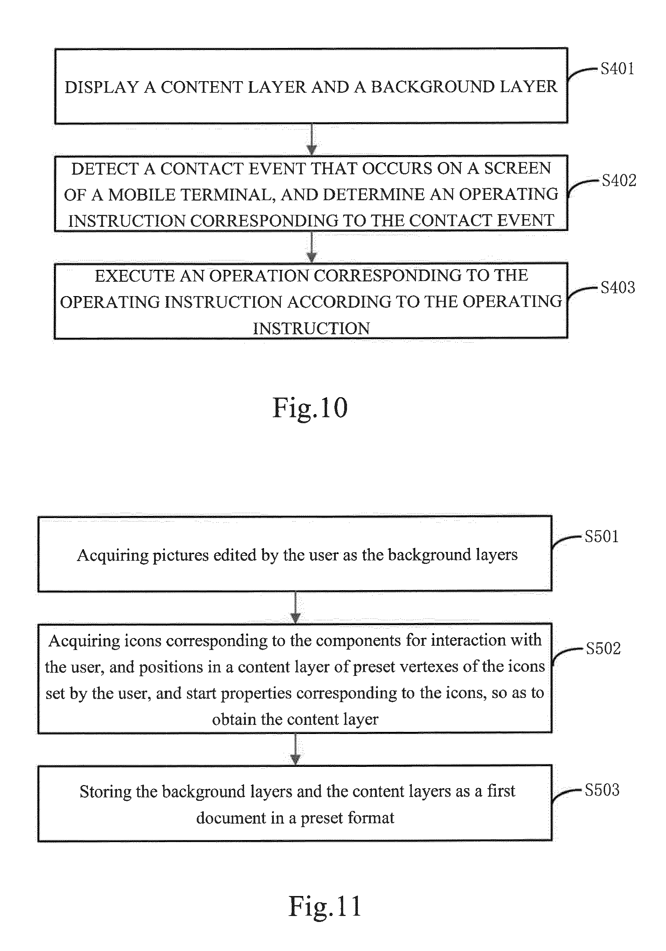

Based on the above desktop system provided by the present disclosure, an interface interaction method for a mobile terminal is provided by the present embodiment, as shown in Fig.10, including the following steps.

In step S401, one or more content layers and one or more background layers are displayed.

Wherein,
each of the above background layers is located below a content layer corresponding to the background layer, so as to present a scene as a desktop background; and
each of the above content layers is located above a background layer corresponding to the content layer, and is arranged therein with components for interaction with the user, preset vertexes of icons corresponding to the components are set in preset positions in the content layer, and the preset positions in the content layer correspond to preset positions in a scene presented by the background layer, such that the icons match with the scene presented by the background layer.

In step S402, a touch event occurring on a screen of the mobile terminal is detected, and an operation instruction corresponding to the touch event is determined and acquired.

Wherein, touch events may include a single click event, a double click event, a long press event, a slide event or a self-defined event, etc. An operation instruction corresponding to the single click event (or the double click event) may a start instruction (for example, start an APP by single clicking the shortcut), and an operation instruction corresponding to the slide event may be a slide instruction.

Further, the long press event may specifically be defined as that, the mobile phone detects a point being touched on the screen, and the point being touched does not move and keeps a preset time period.

The start instruction may specifically be defined as that, when a single click event occurs on the content layer of the desktop system, the occurrence region of the single click event is determined, and if the single click event occurs in an icon region corresponding to a component arranged on the content layer, or occurs in a distance from the icon region less than a preset distance, it is determined that the single click event is a start instruction of the component corresponding to the above icon region.

In step 403, according to the operation instruction, an operation corresponding to the operation instruction is performed.

Specifically, in this embodiment, the background layer may include one or more slidable background layers.

In case where the background layer includes only one slidable background layer, the step 403 may specifically be that, if the operation instruction is a slide instruction, the content layer and the background layer corresponding to the touch event slide in a direction instructed by the slide instruction by preset distances, such that the preset positions of the above content layer correspond to the preset positions of the scene presented by the slidable background layer.

In case where the background layer includes a plurality of slidable background layers, the step 403 may specifically be that,
the content layer corresponding to the touch event slides in a direction instructed by the slide instruction by a preset distance, and each of the slidable background layers slides in a direction instructed by the slide instruction by a preset distance corresponding to the layer of the slidable background layer.

In the desktop system shown in Fig.4, for example, the third frame is displayed on the current screen, and in this case, if the mobile phone detects a touch event occurring on the screen, and determines that the operation instruction corresponding to the touch event is a slide instruction to left, the content layer and the close view background layer slide to left by a preset distance equal to a width of the screen, and the distant view background layer slides to left by a distance less than the width of the screen, so as to present to the user with a from-close-to-far solid visual effect.

Further, the above background layers may further include a stationary background layer. Accordingly, if a background layer is a stationary background layer, it does not slide even the mobile terminal receives a slide instruction.

Still further, before the mobile phone displays the content layers and the back ground layers provided by the present disclosure, the method may further include an edit process by the designer on the background layers and the content layers, as shown in Fig.11, specifically including the following steps.

In step S501, a picture edited from the user is acquired as the background layers.

It should be noted that, if the background layer includes two or more background layers, the step specifically includes:
pictures of at least two layers edited from the user, and corresponding relationship between layers of the pictures and layers of the background layers set from the user are acquired, as the background layers.

Wherein, the background layers may be edited by the designer through a picture edit tool. Moreover, the pictures taken as the background layers are divided into a plurality of layers. When the designer sets the pictures as the background layers, he/she should set the corresponding relationship between the layers of the pictures and the layers of the background layers.

For example, in the desktop system shown in Fig.4, the background layer consists of a close view background layer and a distant view background, which may consist of a distant view picture layer 101 and a close view picture layer. Wherein, the close view picture layer includes a left wall cabinet 201, a right cabinet 202, a wall 203, a window 204 and a table 205. The distant view picture layer 101 and the left wall cabinet 201, the right cabinet 202, the wall 203, the window 204 and the table 205 in the close view picture layer may constitute a static picture serving as the background layer. The distant view picture layer 101 is set as the distant view background layer, and the close view picture layer constituted by the left wall cabinet 201, the right cabinet 202, the wall 203, the window 204 and the table 205 serves as the close view background.

In step S502, icons corresponding to the components for interaction with the user, and positions in a content layer of preset vertexes of the icons set from the user, and start properties corresponding to the icons are acquired, so as to obtain the content layer.

It should be noted that, after the designer completes editing of the icons in the content layer, he/she should set the start properties of the icons. The start properties include names or start paths of the components corresponding to the icons.

For example, if an icon corresponds to a shortcut of a website, a website address corresponding to the icon needs to be defined, and if an icon corresponds to a shortcut of an APP, a name of the APP corresponding to the icon needs to be defined.

In step S503, the background layers and the content layers are stored as a first document in a preset format.

It should be noted that, after the designer completes editing the background layers and the content layers, and stores the edited background layers and the content layers as the first document in the preset format, the first document may be downloaded to a plurality of mobile phones, such that each of the mobile phones may support the desktop system provided by the present disclosure.

Further, before the step S401, the method may further include:
the mobile phone acquires the first document.

Accordingly, the step S401 may specifically include:
interpreting the first document according to the preset format, so as to obtain the content layers and the background layers, and displaying the content layers and the background layers.

Further, after the step S401, a method for editing a desktop scene by a user is further provided by the present disclosure, specifically including:
when an instruction of editing a displayed component issued from the user is received, candidate components are displayed at preset positions of the screen of the mobile terminal;
after the user selects a candidate component, the candidate component is set in the content layer at a position corresponding to the displayed component.

It should be noted that, the above editing to the component in the desktop scene is preferably performed in a case where sizes of the icons corresponding to the components arranged in the content layer are all the same.

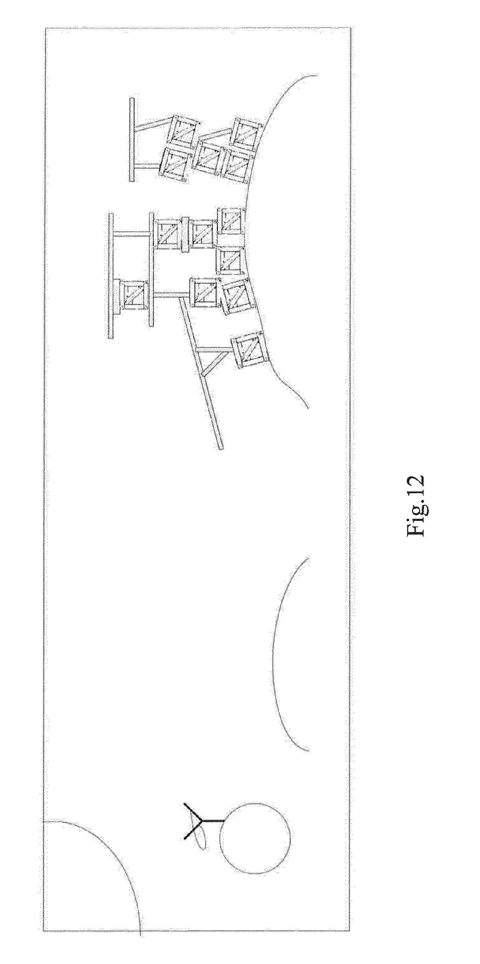

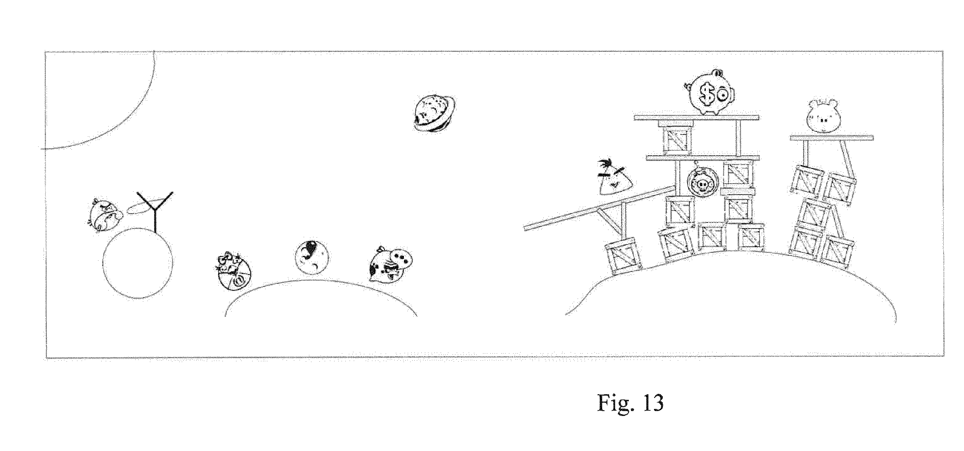

As shown in Fig.12, a background layer is provided by taking "angry birds" as the desktop. Fig.13 is a desktop obtained based on Fig.12. In the desktop system shown in Fig.13, figures of various elements (such as the birds, pigs, etc.) of "angry birds" are taken as icons of the components, and set in the content layer, and the positions of the icons in the content layer correspond to the positions in the background shown in Fig.12.

Hereinafter, a method for editing a desktop scene by a user is illustrated as an example, and the method includes the following steps.

In step A, it is determined whether an instruction issued from the user of editing a component already displayed on the screen of the mobile phone is received, if it is received, step B is performed, and if it is not received, the mehtod returns to the step A and the step A repeatedly performed.

Specifically, it may be set that a predetermined operation event corresponds to an instruction of editing a component already displayed on the screen of the mobile phone, that is, if the predetermined operation event is triggered, it is determined that the user issues the instruction of editing the component already displayed on the screen of the mobile phone.

Wherein, the above predetermined operation event may specifically be :
a touch event with one or more point being touched occurs on the screen;
or, a slide event of one or more point being touched sliding along a preset trajectory occurs on the screen;
or, a preset press key is triggered.

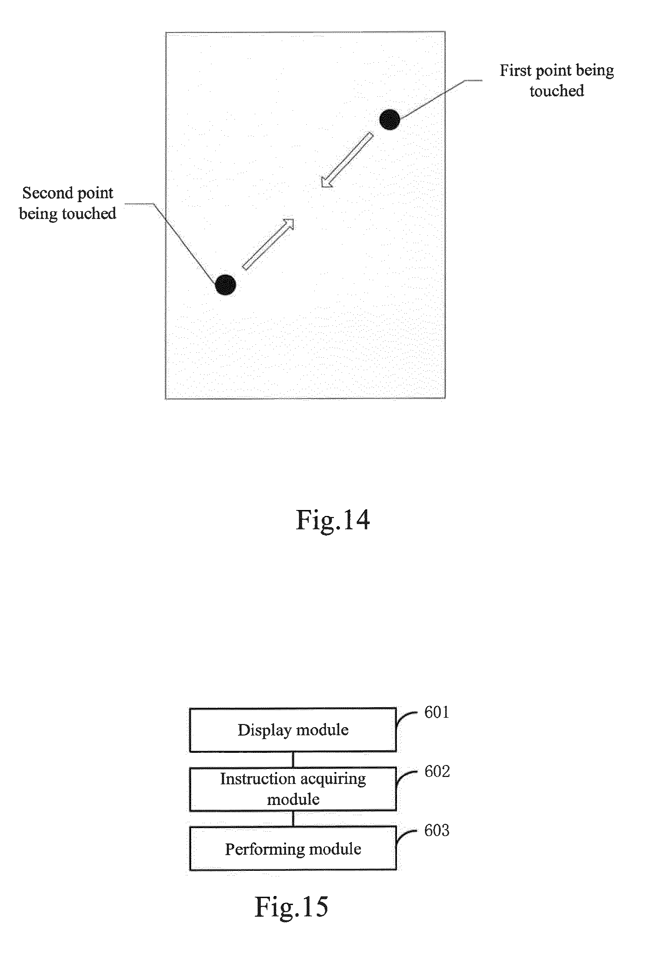

In this embodiment, as shown in Fig.14, for example, the predetermine operation event may specifically be a slide event of two point being touched (a first point being touched and a second point being touched) sliding in opposing directions on the screen.

In step B, a candidate component is displayed.

Wherein, the candidate component is a component that does not exist on the current desktop, and a size of the icon of the candidate component is the same as that of the icon of the component to be replaced.

In step C, the already displayed component selected by the user is hidden, and the selected candidate component is set at a position of the already displayed component selected by the user in the content layer.

Specifically, the step C may include at least the following implementation manners:
the user touches the position corresponding to the component to be replaced, and thereby the above touched component to be replaced is taken as the displayed component selected by the user, and then the candidate component to be used is touched, thereby the candidate component to be used is placed at the position of the candidate component to be used in the content layer.
   or,
the user selects the candidate component to be used and drags it to the position corresponding to the component to be replaced, so as to complete the process of placing the candidate component to be used at the position of the candidate component to be used in the content layer.

In addition, an interface interaction apparatus for a mobile terminal is provided by embodiments of the present disclosure. As shown in Fig.15, the apparatus specifically includes:
a display module 601, configured to display one or more content layers and one or more background layers;
an instruction acquiring module 602, configured to detect a touch event occurring on a screen of the mobile terminal, and determine and acquire an operation instruction corresponding to the touch event; and
a performing module 603, configured to, according to the operation instruction, perform an operation corresponding to the operation instruction.

Wherein, each background layer is located below a content layer corresponding to the background layer, and is configured to present a scene as a desktop background; and
each content layers is located above a background layer corresponding to the content layer, and is arranged therein with components for interaction with the user. Preset vertexes of icons corresponding to the above components are set in preset positions in the content layer, and the preset positions in the content layer correspond to preset positions in a scene presented by the background layer, such that the icons match with the scene presented by the background layer.

Further, the above background layer include one slidable background layer, and the performing module 603 is specifically configured to, if the operation instruction is a slide instruction, cause the content layer and the background layer corresponding to the touch event to slide in a direction instructed by the slide instruction by preset distances, such that the preset positions of the above content layer correspond to the preset positions of the scene presented by the slidable background layer.

Further, the above background layer include a plurality of slidable background layers, and the performing module 603 is specifically configured to cause the content layer corresponding to the touch event to slide in a direction instructed by the slide instruction by a preset distance, and cause each of the slidable background layers to slide in a direction instructed by the slide instruction by a preset distance corresponding to the layer of the slidable background layer.

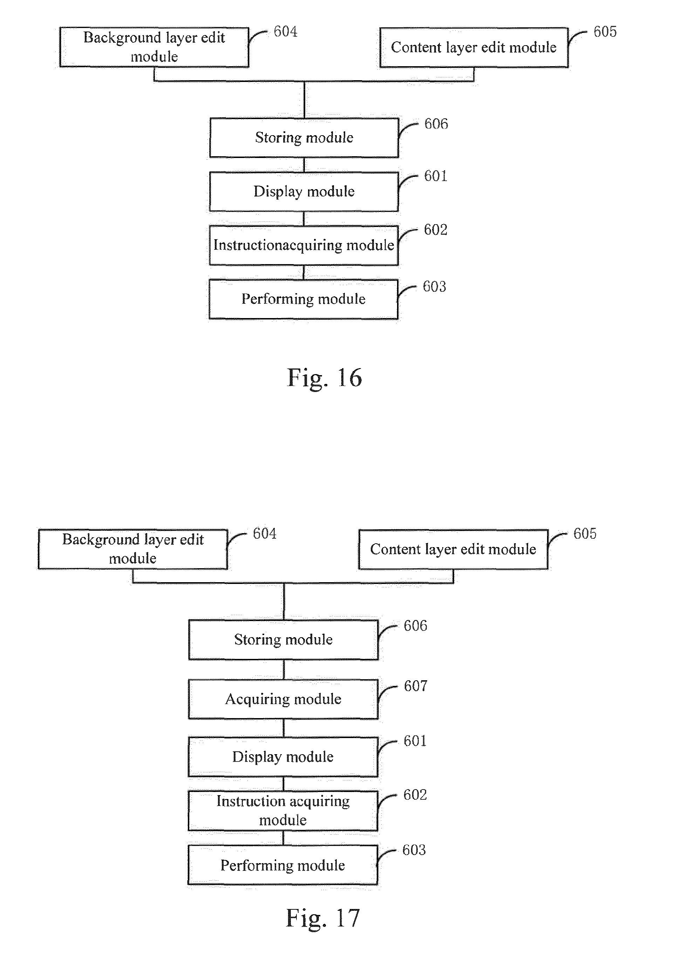

Further, as shown in Fig.16, the above apparatus further includes:
a background layer edit module 604, configured to acquire pictures edited from the user as the background layers before the display module 601 displays the content layers and the background layers;
a content layer edit module 605, configured to acquire icons corresponding to the components for interaction with the user, and positions in a content layer of preset vertexes of the icons set from the user, and start properties corresponding to the icons, so as to obtain the content layer; and
a storing module 606, configured to store the background layers and the content layers as a first document in a preset format.

Wherein, the start properties include names or start paths of the components corresponding to the icons.

Further, when the above background layers include a plurality of slidable background layers, the background layer edit module 605 is specifically configured to, before the display module 601 displays the content layers and the background layers, acquire pictures of at least two layers edited from the user, and corresponding relationship between layers of the pictures and layers of the slidable background layers set from the user, as the background layers.

Further, as shown in Fig.17, the above apparatus further includes:
an acquiring module 607, configured to acquire the first document, before the display module displays the content layers and the background layers.

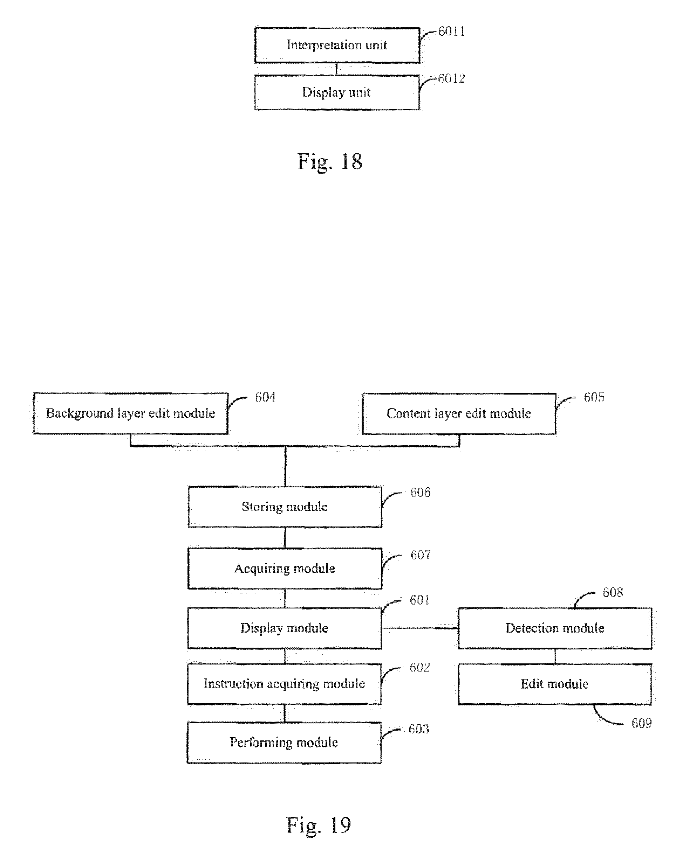

Further, as shown in Fig.18, the display module 601 specifically includes:
an interpretation unit 6011, configured to interpret the first document according to the preset format, to obtain the content layers and the background layers; and
a display unit 6012, configured to display the content layers and the background layers.

Further, as shown in Fig.19, the above apparatus further includes:
a detection module 608, configured to, after the display module 601 displays the content layers and the background layers, and when an instruction of editing a displayed component issued from the user is received, display candidate components at preset positions of the screen of the mobile terminal; and
an edit module 609, configured to, after the user selects a candidate component, set the candidate component in the content layer at a position corresponding to the displayed component.

Further, a nonvolatile readable storage medium is further provided by the present disclosure, including one or more units. The one or more units are configured to interact with a touch screen, a processor and a memory, to cause the device to have the following functions:
displaying one or more content layers and one or more background layer;
detecting a touch event occurring on the screen of the mobile terminal, and determining and acquiring an operation instruction corresponding to the touch event; and
according to the operation instruction, performing an operation corresponding to the operation instruction.

Wherein, each background layer is located below a content layer corresponding to the background layer, and is configured to present a scene as a desktop background; and
each content layer is located above a background layer corresponding to the content layer, and is arranged therein with components for interaction with the user. Preset vertexes of icons corresponding to the above components are set in preset positions in the content layer, and the preset positions in the content layer correspond to preset positions in a scene presented by the background layer, such that the icons match with the scene presented by the background layer.

When the above background layers include one slidable background layer, the step of, according to the operation instruction, performing the operation corresponding to the operation instruction may specifically include:
if the operation instruction is a slide instruction, causing the content layer and the background layer corresponding to the touch event to slide in a direction instructed by the slide instruction by preset distances, such that the preset positions of the content layer correspond to the preset positions of the scene presented by the slidable background layer.

When the above background layers include a plurality of slidable background layers, the step of, according to the operation instruction, performing the operation corresponding to the operation instruction may specifically include:
causing the content layer corresponding to the touch event to slide in a direction instructed by the slide instruction by a preset distance, and causing each of the slidable background layers to slide in a direction instructed by the slide instruction by a preset distance corresponding to the layer of the slidable background layer.

Further, the above one or more units, may cause the device to have the following functions:
before the content layers and the background layers are displayed, acquiring pictures edited from the user as the background layers;
acquiring icons corresponding to the components for interaction with the user, and positions in a content layer of preset vertexes of the icons set from the user, and start properties corresponding to the icons, so as to obtain the content layer; and
storing the background layers and the content layers as a first document in a preset format.

Wherein, the start properties include names or start paths of the components corresponding to the icons.

Further, the above one or more units may further cause the device to have the following function:
before the content layers and the background layers are displayed, acquiring pictures of at least two layers edited from the user, and corresponding relationship between layers of the pictures and layers of the slidable background layers set from the user, as the background layers.

Further, the above one or more units may further cause the device to have the following function:
before the content layers and the background layers are displayed, acquiring the first document.

Further, the displaying the content layers and the background layers, specifically includes:
interpreting the first document according to the preset format, so as to obtain the content layers and the background layers; and
displaying the content layers and the background layers.

Further, the above one or more units may further cause the device to have the following functions:
after the content layers and the background layers are displayed, and when an instruction of editing a component issued from the user is received, displaying candidate components at preset positions of the screen of the mobile terminal; and
after the user selects a candidate component, setting the candidate component in the content layer at a position corresponding to the component.

In the desktop system and an interface interaction method and apparatus for a mobile terminal provided by the embodiments of the present disclosure, the desktop system provided by the present disclosure is constituted of one or more content layers and one or more background layers, so the designer only needs to set preset vertexes of the icons corresponding to the components in a content layer to preset positions in the content layer, without limit the shapes of the components. Thereby, the designer may be given more design powers, and the preset positions of the components in the content layer keep corresponding to the preset positions in scene presented by the slidable background layer, so the designer may match the icons of the components with the scene presented by the background layer to obtain a vivid visual effect, and the styles of the desktop interface may be beautified and diversified, so as to improve user experience.

Through the above description to the embodiments, it can be clearly understood by those skilled in the art that, the embodiments of the present disclosure may be implemented by hardware, or by software working with necessary common hardware platform. Based on this understanding, the technical solution of the embodiments of the present disclosure may be embodied in a form of software product which may be stored in a non-volatile storage medium (such as CD-ROM, flash disk, or mobile hard disk, etc.) and which may include a series of instructions to enable a computer device (such as personal computer, server, or network device, etc.) to implement the method described in the embodiments of the present disclosure.

It can be understood by those skilled in the art that, the appending drawings are only illustrative diagrams for the preferred embodiments, and the modules or the procedures in these drawings may not be necessary for implementing the present disclosure.

It can be understood by those skilled in the art that, the modules in a device of the embodiment may be distributed in the device according to the description of the embodiments, or may be correspondingly varied to be contained in one or more devices other than that of this embodiment. The modules in the above embodiments may be combined as one module, or may be further divided into several sub-modules.

The aforementioned sequence numbers of the embodiments of the present disclosure is merely for description purpose, not relating to showing the superiority or inferiority of the embodiments.

It is obvious that those skilled in the art may make various modifications and variation to the present disclosure without departing the spirit and scope of the present disclosure. Accordingly, if such modification and variation fall within the scope of the claims of the present application or equivalents thereof, the present application intends to embrace such modification and variation.

## Claims

1. A desktop system for a mobile terminal, **characterized in that**, the desktop system is constituted of one or more content layers and one or more background layers;
wherein,
each background layer is located below a content layer corresponding to the background layer, and is configured to present a scene as a desktop background; and
each content layer is located above a background layer corresponding to the content layer, and is arranged therein with components for interaction with an user, preset vertexes of icons corresponding to the components are set in preset positions in the content layer, and the preset positions in the content layer correspond to preset positions in a scene presented by the background layer, such that the icons match with the scene presented by the background layer.

2. The desktop system according to claim 1, **characterized in that**, the background layer comprise one slidable background layer,
wherein, after the mobile terminal detects a slide instruction, the slidable background layer and the content layer slide by preset distances in a direction instructed by the slide instruction, and the preset positions in the content layer keep corresponding to the preset positions of the scene presented by the slidable background layer.

3. The desktop system according to claim 1, **characterized in that**, the background layer comprise a plurality of slidable background layers,
wherein, after the mobile terminal detects a slide instruction, each of the slidable background layers slides in a direction instructed by the slide instruction by a preset distance corresponding to a layer of the slidable background layer.

4. The desktop system according to claim 3, **characterized in that**, a width of each of the slidable background layers corresponds to the layer of the slidable background layer.

5. The desktop system according to any one of claim 2 to 4, **characterized in that**, the background layers further comprise:
a stationary background layer, configured to be a desktop background, wherein the stationary background layer does not perform a sliding operation when the mobile phone detects a slide instruction.

6. An interface interaction method for a mobile terminal, **characterized in that**, the method comprises:
displaying one or more content layers and one or more background layer;
detecting a touch event occurring on a screen of the mobile terminal, and determining and acquiring an operation instruction corresponding to the touch event; and
according to the operation instruction, performing an operation corresponding to the operation instruction,
wherein each background layer is located below a content layer corresponding to the background layer, and is configured to present a scene as a desktop background, and
each content layer is located above a background layer corresponding to the content layer, and is arranged therein with components for interaction with an user, preset vertexes of icons corresponding to the components are set in preset positions in the content layer, and the preset positions in the content layer correspond to preset positions in a scene presented by the background layer, such that the icons match with the scene presented by the background layer.

7. The method according to claim 6, **characterized in that**, the background layer comprise one slidable background layer,
wherein the performing the operation corresponding to the operation instruction according to the operation instruction, specifically comprises:
if the operation instruction is a slide instruction, causing the content layer and the background layer corresponding to the touch event to slide in a direction instructed by the slide instruction by preset distances, such that the preset positions of the content layer correspond to the preset positions of the scene presented by the slidable background layer.

8. The method according to claim 6, **characterized in that**, the background layer comprise a plurality of slidable background layers,
wherein the performing the operation corresponding to the operation instruction according to the operation instruction, specifically comprises:
causing the content layer corresponding to the touch event to slide in a direction instructed by the slide instruction by a preset distance, and causing each of the slidable background layers to slide in a direction instructed by the slide instruction by a preset distance corresponding to a layer of the slidable background layer.

9. The method according to claim 6, **characterized in that**, before displaying the content layers and the background layers, the method further comprises:
acquiring pictures edited from the user as the background layers;
acquiring icons corresponding to the components for interaction with the user, and positions in a content layer of preset vertexes of the icons set from the user, and start properties corresponding to the icons, so as to obtain the content layer; and
storing the background layers and the content layers as a first document in a preset format,
wherein the start properties comprise names or start paths of the components corresponding to the icons.

10. The method according to claim 9, **characterized in that**, the step of, if the background layers comprise the plurality of slidable background layers, acquiring the pictures edited from the user as the background layers, specifically comprises:
acquiring pictures of at least two layers edited from the user, and corresponding relationship between layers of the pictures and layers of the slidable background layers set from the user, as the background layers.

11. The method according to claim 9, **characterized in that**, before displaying the content layers and the background layers, the method further comprises:
acquiring the first document.

12. The method according to claim 11, **characterized in that**, the displaying the content layers and the background layers, specifically comprises:
interpreting the first document according to the preset format, so as to obtain the content layers and the background layers; and displaying the content layers and the background layers.

13. The method according to claim 6, **characterized in that**, after displaying the content layers and the background layers, the method further comprises:
when an instruction of editing a displayed component issued from the user is received, displaying candidate components at preset positions of the screen of the mobile terminal; and
after the user selects one of the candidate component, setting the candidate component in the content layer at a position corresponding to the displayed component.

14. An interface interaction apparatus for a mobile terminal, **characterized in that**, the apparatus comprises:
a display module, configured to display one or more content layers and one or more background layers;
an instruction acquiring module, configured to detect a touch event occurring on a screen of the mobile terminal, and determine and acquire an operation instruction corresponding to the touch event; and
a performing module, configured to, according to the operation instruction, perform an operation corresponding to the operation instruction,
wherein each background layer is located below a content layer corresponding to the background layer, and is configured to present a scene as a desktop background, and
each of content layers is located above a background layer corresponding to the content layer, and is arranged therein with components for interaction with an user, preset vertexes of icons corresponding to the components are set in preset positions in the content layer, and the preset positions in the content layer correspond to preset positions in a scene presented by the background layer, such that the icons match with the scene presented by the background layer.

15. The apparatus according to claim 14, **characterized in that**, the background layer comprises one slidable background layer,
wherein the performing module is specifically configured to, if the operation instruction is a slide instruction, cause the content layer and the background layer corresponding to the touch event to slide in a direction instructed by the slide instruction by preset distances, such that the preset positions of the content layer correspond to the preset positions of the scene presented by the slidable background layer.

16. The apparatus according to claim 14, **characterized in that**, the background layers comprise a plurality of slidable background layers,
wherein the performing module is specifically configured to cause the content layer corresponding to the touch event to slide in a direction instructed by the slide instruction by a preset distance, and cause each of the slidable background layer to slide in a direction instructed by the slide instruction by a preset distance corresponding to a layer of the slidable background layer.

17. The apparatus according to claim 14, **characterized in that**, the apparatus further comprises:
a background layer edit module, configured to, before the display module displays the content layers and the background layers, acquire pictures edited from the user as the background layers;
a content layer edit module, configured to acquire icons corresponding to the components for interaction with the user, and positions in a content layer of preset vertexes of the icons set from the user, and start properties corresponding to the icons, so as to obtain the content layer; and
a storing module, configured to store the background layers and the content layers as a first document in a preset format,
wherein the start properties comprise names or start paths of the components corresponding to the icons.

18. The apparatus according to claim 17, **characterized in that**, when the background layers comprise a plurality of slidable background layers, the background layer edit module is specifically configured to, before the display module displays the content layers and the background layers, acquire pictures of at least two layers edited from the user, and corresponding relationship between layers of the pictures and layers of the slidable background layers set from the user, as the background layers.

19. The apparatus according to claim 17, **characterized in that**, the apparatus further comprises:
an acquiring module, configured to, before the display module displays the content layers and the background layers, acquire the first document.

20. The apparatus according to claim 19, **characterized in that**, the display module specifically comprises:
an interpretation unit, configured to interpret the first document according to the preset format, so as to obtain the content layers and the background layers; and
a display unit, configured to display the content layers and the background layers.

21. The apparatus according to claim 16, **characterized in that**, the apparatus further comprises:
a detection module, configured to, after the display module displays the content layers and the background layers, and when an instruction of editing a displayed component issued from the user is received, display candidate components at preset positions of the screen of the mobile terminal; and
an edit module, configured to, after the user selects one of the candidate components, set the candidate component in the content layer at a position corresponding to the displayed component.
